# EUROPEAN PATENT SPECIFICATION

(11) **EP 3 537 005 B1**
(45) Date of publication and mention of the grant of the patent: **26.05.2021**
(21) Application number: 19158800.3
(22) Date of filing: 22.02.2019
(51) Int. Cl.: F16H 55/36, F16H 55/44, F16H 55/48, F16H 57/04

(54) **V-BELT ROLLER AND METHOD OF REMOVING HEAT FROM THE ROLLER BEARING**
KEILRIEMENROLLE UND VERFAHREN ZUM ENTFERNEN VON WÄRME VOM ROLLENLAGER
ROULEAU DE COURROIE TRAPEZOÏDALE ET PROCEDE POUR ELIMINER LA CHALEUR DU ROULEMENT

(30) Priority: 23.02.2018 PL 42466618
(43) Date of publication of application: 11.09.2019
(73) Proprietor: Caffaro Spólka Z Organiczona Odpowiedzialnoscia Spólka Komandytowa, 28-500 Kazimierza Wielka (PL)
(72) Inventor: Bochnia, Marcin, 28-500 Kazimierza Wielka (PL); Setlak, Rafal, 43-410 Konczyce Male (PL)
(74) Representative: Trawinska, Urszula

(56) References cited:
- DE-A1-102008 016 303
- JP-A- 2001 090 811
- JP-A- 2009 121 517

## Description

The invention relates to a V-belt pulley and a method for dissipating heat from the bearing of the pulley

Pulleys guiding or tensioning a V-belt in mechanical vehicles are usually made of metals, for example of steel or plastics, for example a polyamide with fibreglass. Plastic pulleys are produced by means of injection moulding. Metal pulleys are turned or drawn from sheet metal.

The longevity of the pulley is largely dependent on the longevity of the bearing on which it is seated. The bearing is subject to the impact of mechanical forces and the resulting impact of temperature. Long-lasting operation under the conditions of high temperature generated as a result of the operation of the bearing, and also additionally originating from a heated up internal combustion engine block, impairs the longevity of the bearing. Metal is a good heat conductor, and therefore dissipation of temperature from the bearing is usually sufficient. In the case of plastic pulleys, the dissipation of heat from the bearing for a pulley operating under difficult temperature conditions is insufficient. In its known construction, the pulley consists of an outer ring, usually constituting a track for the V-belt, as well as an inner ring, inside which the bearing is seated. The space between the rings is usually filled, and in the case of plastic pulleys it is usually reinforced with ribbing consisting of convex tongues connecting both rings, which are arranged radially. Sometimes, in steel pulleys there are technical openings used for the access of a tool, usually a spanner, behind the pulley, or reducing its mass. Various bearing cooling methods are known from prior art. Cooling with air or liquid is used the most frequently. It is also known to surround the bearing with various kinds of radiators, aiming at the largest possible surface of a radiator.

American patent description US2017358326A1 discloses a computer hard drive assembly, the so-called e-block, which comprises a plurality of arms seated coaxially on bearings and driven by a VCM motor. Due to the fact that temperature in bearings increases during operation, the solution according to the patent comprises radiation elements which collect heat via the e-block and subsequently dissipate it into the surroundings. The radiation surface of these elements is larger than the surface of abutment with the e-block, via the use of a zigzagged or undulated surface.

Chinese description of utility model CN202097039 (U) discloses a device cooling the bearing of a decanter centrifuge. The device comprises a fan and an air guiding channel. Wherein the fan is attached on a centrifuge drum near the main bed of the bearing. The air driven by the fan blows at the bearing.

Japanese application description JP2003293977A discloses an external cooling device for the bearing of a pump. In this device, on the outer housing of the bearing there are radiator ribs, while an axial fan is attached to the pump shaft on the upper part of the external bearing. The fan rotates in accordance with the rotation of the pump shaft, due to which the air blows at the protrusions of the radiator. The ribs have a special shape which provides direction for the stream of air.

Japanese application JP 2001 090811 A discloses A V-belt pulley comprising a bearing on which an inner ring is seated, support tongues connecting the inner ring to an outer ring constituting the track of the pulley, as well as a support fill between the support tongues, at least two windows uniformly distributed in the circumferential space between rings, wherein the windows on their sides are delimited by the surface of tongues which on one side substantially at half of their width are inclined away from the plane of the longitudinal section of the pulley by an angle α.

German utility model DE3025798 discloses a construction which enables the cooling of a bearing and a brake disc. A sphere or a roller bearing for supporting the wheels of a vehicle which are mounted on the outer track of the bearing with a brake drum or a brake disc has openings in the extension of the inner track, which act as a fan with a radial flow when the wheel is rotating. The flow of air generated this way is directed towards the bearing of the wheel and towards channels at the back of the brake disc, in order to cool down the bearing and the brake. The inner track of the ball bearing has openings in the flange carrying the brake disc and wheel, which act as a radial fan. The induced flow of air cools down the brake disc partially via the channels and partially via the outer track.

Another German utility model application DE102008016303 A1 titled "Tensioning roller device for internal combustion engine of motor vehicle, has fan with axial circular section and openings permitting radial removal of air flow, and wing with supporting section connected to circular section" discloses that the device has device contains an additional lid-shaped heat sink which is in contact with a stationary inner ring of the rolling bearing. the axial annular section of the fan has tongues for attachment to the peripheral part. The blades of the fan have ventilation function.

The object of the present invention is to provide a V-belt pulley with a bearing that allows better dissipation of heat from said bearing and a corresponding method.

The aforementioned problem is solved by a V-belt pulley according to claim 1 and a method according to claim 11.

Further embodiments of the present invention are laid down in the dependent claims.

The object of the invention is, as already mentioned, the development of a method for more efficient dissipation of excess heat caused by the rotational movement of the bearing, heat accumulated from an internal combustion engine block and an increase in heat resulting from the too high tension of the belt guided by the pulley.

During research it has been noticed that in spite of the rotational movement and the presence of tongues in a plastic pulley, it does not generate sufficient air flow to dissipate heat created as a result of friction in the bearing. Therefore, a modified construction of the pulley and a modified bearing cooling method have been proposed, achieved via this construction.

The essence of the construction of the pulley according to the invention constitutes a pulley for tensioning or guiding a belt, comprising a bearing on which an inner ring is seated, support tongues connecting the inner ring to an outer ring constituting a track for the pulley, and a support fill between the support tongues. The essence of the invention is that the pulley comprises at least two windows distributed uniformly in the circumferential space between the aforementioned rings. At their sides, the windows are delimited by the surface of the support tongues, which at one side substantially at half of their width are inclined away from the plane of the central longitudinal section of the pulley at an angle α∈ <1° - 60°> and are arranged with respect to each other in such a manner that the uninclined part of one tongue (421) lies opposite the inclined part of the other.

In another form, the tongues of the pulley are additionally inclined away from the radius of the pulley by an angle β ∈ <1° - 60°>, preferably β ∈ <5° - 50°> . In another particularly preferable form, the pulley is made of plastic and comprises metal reinforcement.

Preferably, the metal reinforcement has an inner ring which comprises the housing of the bearing and corresponds to the inner ring of the pulley, and an outer ring which corresponds to the outer ring of the pulley, while connecting elements are placed between the rings of the reinforcement.

In a preferable form, the discontinuous surface of the reinforcement manifests itself by the existence of openings in the connecting elements, openings in the outer ring and in the through apertures in the inner ring.

Preferably, the pulley is made of plastic and the plastic of the pulley constitutes polymer plastic or a composite of polymer plastic and a reinforcing material. Preferably, the polymer constitutes a polyamide or phenol-formaldehyde resins PF, or melamine-phenol-formaldehyde resins MPF.

Preferably, the material of the reinforcement constitutes deep drawn sheet metal with thickness ranging from 0.1 to 5 mm, preferably ranging from 0.4 to 0.7 mm.

Preferably, the width of the support tongues at the inner ring of the pulley is smaller than the width of the support tongues at the outer ring of the pulley.

The essence of the method for dissipating heat from a bearing pulley included in the aforementioned V-belt pulley according to the invention is that the heat generated as a result of the rotational movement of the bearing is dissipated via a metallic structure with a high heat transfer coefficient, surrounding the housing of the bearing in the form of reinforcement, into the space between the rings of the pulley and into the surface of the outer circumference of the pulley, and it is additionally exposed to the flow of air between the inner and outer ring of the pulley caused by the rotational movement of the pulley.

Due to the used intense flow of air from the surroundings with a lower temperature towards the surroundings with a higher temperature, the pulley according to the invention in an efficient manner dissipates excess heat from the bearing, which results in extending its longevity, and therefore the longevity of the entire pulley. Moreover, the pulley also acts as a fan with respect to the other elements of the arrangement; in particular, it can guide and therefore cool the drive element to which it is attached. The construction of the pulley causes considerable consumption of resource in the form of plastics. There is no plastic where the windows are. This has considerable influence on environmental protection. The use of metal reinforcements additionally increases the dissipation of heat, since this reinforcement acts as a radiator.

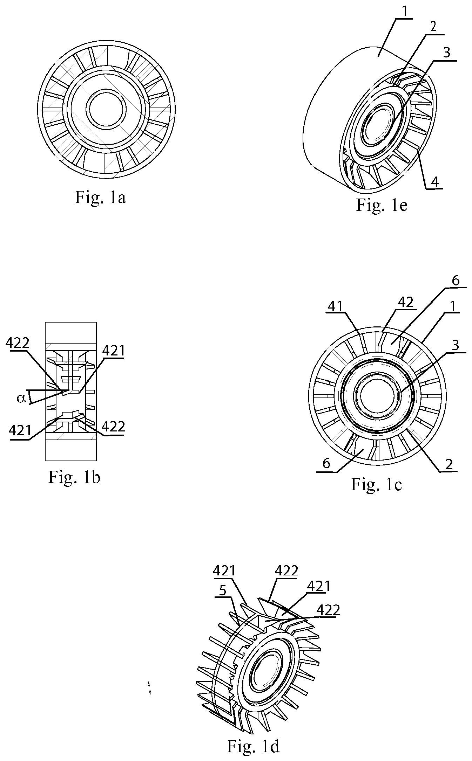

The invention is presented in different embodiments in the following drawings,
where Fig. 1 a-e presents various projections (a - longitudinal section, b - section through a chord, c - front view, d - isometric projection, e - perspective view) of the pulley described in the first embodiment, a version with two windows.
Fig. 2 a-e presents respective projections of the pulley from the first embodiment, a version with three windows.
Fig. 3 a-e presents respective projections of the pulley from the first embodiment, a version with four windows.
Fig. 4 a-e presents respective projections of the pulley from the first embodiment, a version with six windows.
Fig. 5 a-e presents respective projections of the pulley from the first embodiment, a version with eight windows.
Fig. 6 a-c presents various versions of the angle α for the inclination of the tongues of the pulley away from the central plane of the longitudinal section of the pulley.
Fig. 7 a-e presents various projections (a - longitudinal section, b - section through a chord, c - front view, d - isometric projection, e - perspective view) of the pulley described in the second embodiment, a version with two windows.
Fig. 8 a-e presents respective projections of the pulley from the second embodiment, a version with three windows.
Fig. 9 a-e presents respective projections of the pulley from the second embodiment, a version with four windows.
Fig. 10 a-e presents respective projections of the pulley from the second embodiment, a version with six windows.
Fig. 11 a-e presents respective projections of the pulley from the second embodiment, a version with eight windows.
Fig. 12 a-b - Fig. 14 a-b presents various versions of the angle β for the inclination of the tongues of the pulley away from the radius of the pulley.
Fig. 15 presents reinforcement of the pulley according to embodiment 3 a in an isometric projection,
Fig. 16 presents the view of reinforcement according to embodiment 3 a from the front,
Fig. 17 presents the view of a plastic pulley with inner reinforcement according to embodiment 3 a.
Fig. 18 presents reinforcement of the pulley according to embodiment 3 b in an isometric projection,
Fig. 19 presents the view of reinforcement according to embodiment 3 b from the front,
Figs. 20, 21 present the view of a plastic pulley with inner reinforcement according to embodiment 3 b.

Whenever the present description mentions a V-belt, each time this term is meant to be understood as any unending belt used in belt drives, which belt must have at least one element or groove with a trapezoidal cross-section or a shape similar to trapezoidal. Also, the number of elements with a trapezoidal cross-section or elements with a shape similar to trapezoidal is not limited in advance, nor is the structure and construction of such a belt relevant, or the material of which it is made, or its geometric dimensions such as: length, width, pitch, the number of ribs, nor is it important whether the belt transmits the drive to a single receiving device, or if it is a serpentine belt driving numerous subsystems, nor is it significant how many pulleys, tensioning elements and vibration dampers this belt cooperates with. Also, it is of no relevance whether belt pulleys are driven by the carved part of the belt, or by its flat part.

### Embodiment 1.

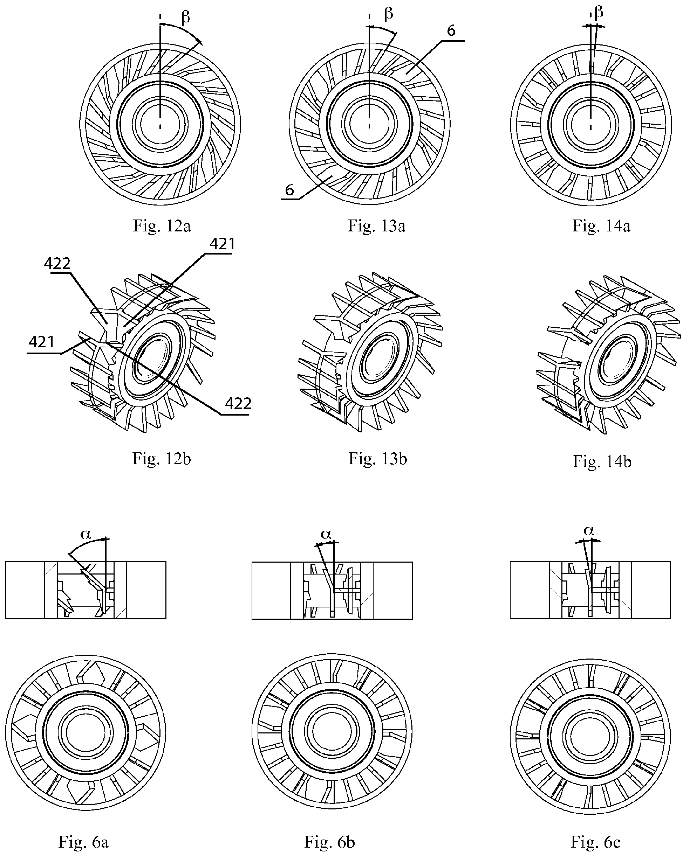

A pulley intended substantially for guiding or tensioning a V-belt in internal combustion engines of mechanical vehicles, presented in Fig. 1 - Fig. 6, is made of a polyamide material with an admixture of fibreglass. A pulley consists of an outer ring **1,** from its outer side constituting a track for the V-belt, as well as an inner ring **2**, inside which a bearing **3** is seated. Between the rings there are support tongues **41**, **42,** in this embodiment arranged substantially radially with respect to the centre of the pulley. The width of tongues **41** and **42** at the inner ring **2** is smaller than the width of tongues at the outer ring. Between certain tongues there is a support fill **5**, whose width is considerably smaller than the width of support tongues **4**. Some of the support tongues **41** are situated symmetrically and perpendicular to the central plane of the longitudinal section of the pulley and perpendicular to the surfaces of rings **1** and **2**. Part of the tongues **42** is not symmetrical with respect to the central plane of the longitudinal section of the pulley. The asymmetrical tongue **42** is at one side at half of its width inclined away from the plane of the central longitudinal section of the pulley at the angle α∈ <1° - 60°>, which is presented in Fig. 6a-c. Fig. 6c presents the angle α with a low value, e.g. 1° or 5°, Fig. 6b presents the angle with a medium value, e.g. 20, 30°, Fig. 6a presents the angle with a high value, e.g. 60° or 45°. Preferable angle ranges in terms of the flow of air fall within a range of α∈ <10° - 45°>. Asymmetrical tongues 42 are arranged with respect to each other in such a way that the uninclined part of one tongue **421** lies opposite the inclined part of the second tongue **422**. The support fill **5** is placed in the space between the symmetrical tongues **41**, as well as between the symmetrical tongues **41** and the asymmetrical tongues **42**. In the space between asymmetrical tongues **42** there is no support fill **5**. A space with no filling between tongues **4b** forms a window **6** constituting an air blade.

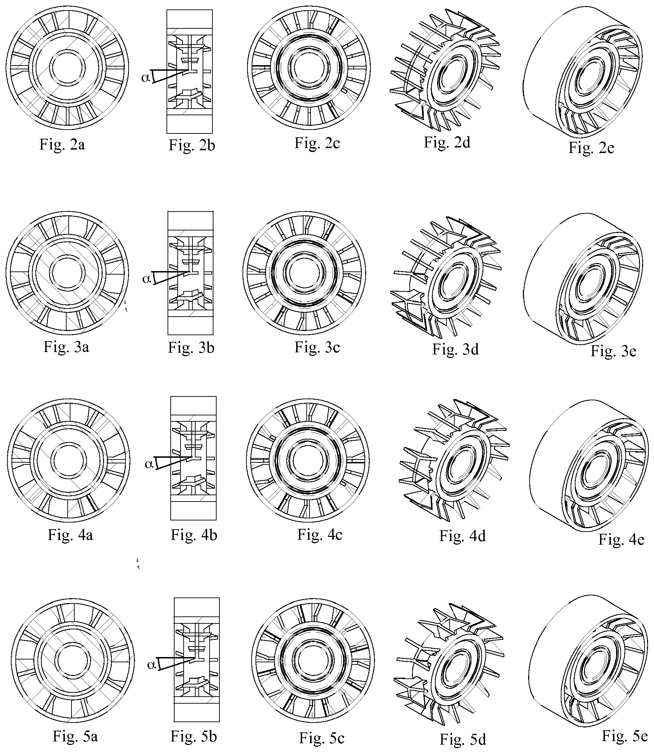

Windows **6** between the tongues **42** enable the flow of air between them. In addition, inclinations **421** and **422** of tongue surfaces result in capturing the air and directing it through the recess of the opening, and subsequently outside the pulley in a direction away from the area of lower temperature to the area of higher temperature. Such a shape of the tongues **42** creates air blades for the flow of air. In typical pulleys according to embodiment **1** there can be two (Fig.1 a-e) or three (Fig.2 a-e) or four (Fig.3 a-e) or six (Fig.4 a-e) or eight windows (Fig.5 a-e) **6**, which are uniformly distributed in the circumferential space between rings **1** and **2**. A pulley in the configuration described above can rotate both ways, depending on the side in which the stream of air is supposed to flow through it. Therefore, it is possible to blow at an object to which it is attached, for example an engine body, or extract hot air from the engine body.

### Embodiment 2.

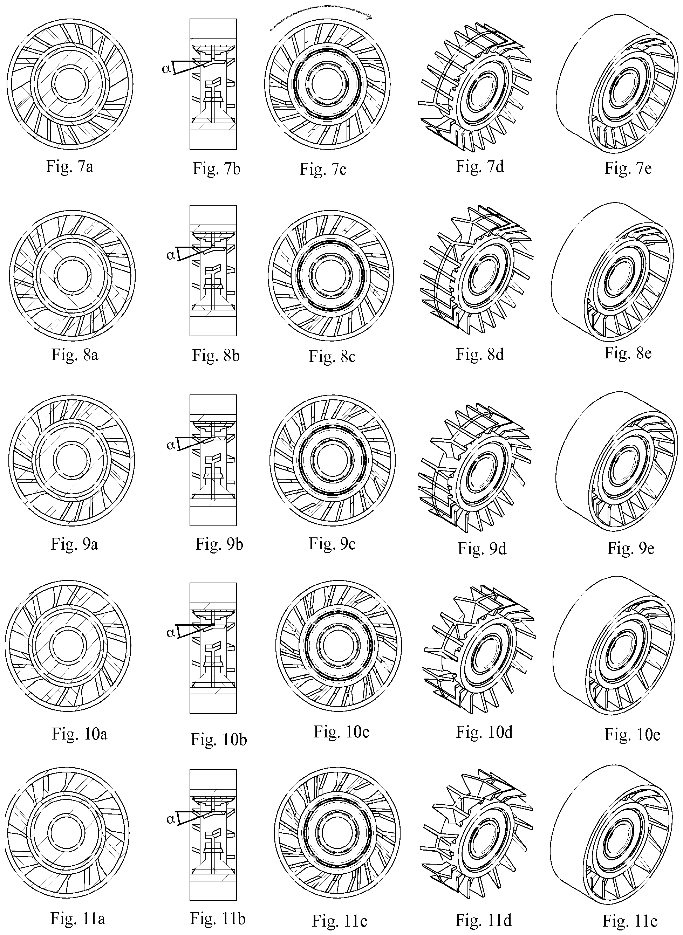

In the second embodiment, the support tongues **41** and **42** of the pulley made of the same material as in embodiment 1 are inclined from the radius by the angle β ∈ <1° - 60°>. Fig. **12** **a**, **b** presents a version of the pulley where the angle β is 60° or 50°, Fig. **13 a, b** presents a version of the pulley where the angle β is 32°, Fig. **14 a, b** presents a version of the pulley where the angle β is 5° or 1°. The range of angles preferable due to air flow amounts to: β ∈ <5° - 50°>. The remaining arrangement of tongues is analogical to the first embodiment. The numbers of windows **6** specified in the first embodiment also apply to the present pulley with radially inclined tongues. (Fig 7a,b,c,d,e - Fig 11 a,b,c,d,e) The pulley is one-directional, i.e. It should rotate in the direction of inclination of the tongues.

### Embodiment 3a

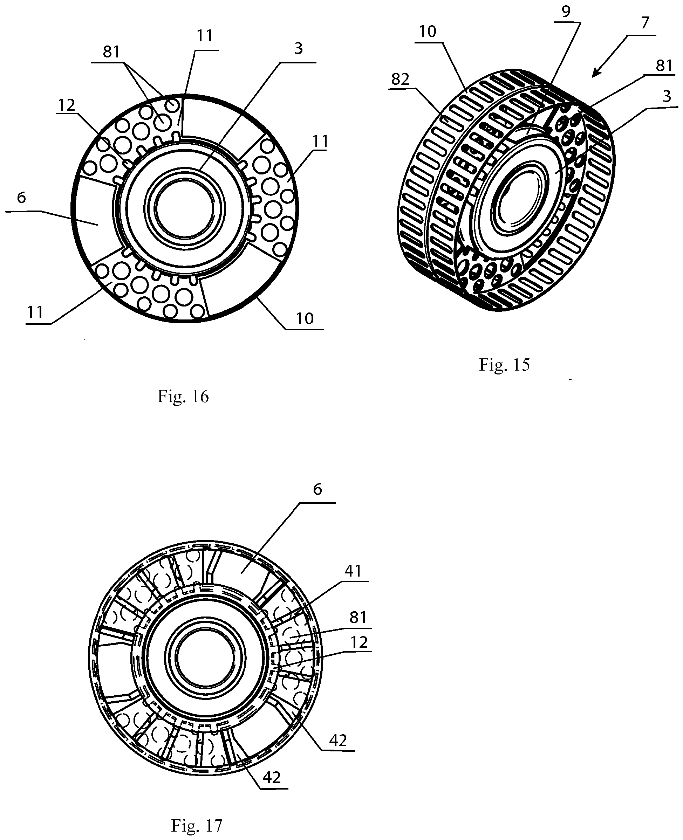

In embodiment 3a, the arrangement of tongues is the same as in embodiment 1 or 2, meaning that the pulley has tongues which are radially arranged or properly inclined away from the radius, although inside the polyamide casting there is metal reinforcement **7** (Fig. 15 - Fig. 17). The reinforcement **7** is made of deep drawn sheet metal with thickness of approx. 6 mm. Openings **81** and **82** are made in the reinforcement **7**. The reinforcement **7** has an inner ring **9** which metallically surrounds the housing of the bearing and corresponds to the inner ring **2** of the pulley, and an outer ring **10** which corresponds to the outer ring **1** of the pulley. Connecting elements **11** are placed between rings **9** and **10** of the reinforcement **7**. The reinforcement **7** has a substantially meshed construction, which is for example achieved by laser cutting. The meshed construction of the reinforcement **7** manifests itself in the existence of openings **81** in the connecting elements **11**, openings **82** in the outer ring **10** and in the through apertures **12** in the inner ring. The number of connecting elements **11** is proper for the number of windows **6** of the pulley. The manufacturing of a finished pulley involves applying the reinforcement **7** onto the bearing **3** and subsequently enclosing it in a casting mould, into which polyamide plastic is injected. Plastic passes through openings and apertures in the reinforcement, due to which the reinforcement is overpoured by it. After cooling down, the pulley constituting a hybrid of plastic and metal is removed from the mould. A polyamide pulley with inner reinforcement **7** is presented in Fig. 17. The inner metal ring **9** surrounding the bearing in connection to the connecting elements **11** and the outer ring **10** causes increased dissipation of heat from the bearing. Metal is a considerably better heat conductor than plastic, due to which the dissipation of heat is more efficient. The reinforcement of the pulley also causes an increase in its resistance to mechanical load.

### Embodiment 3b

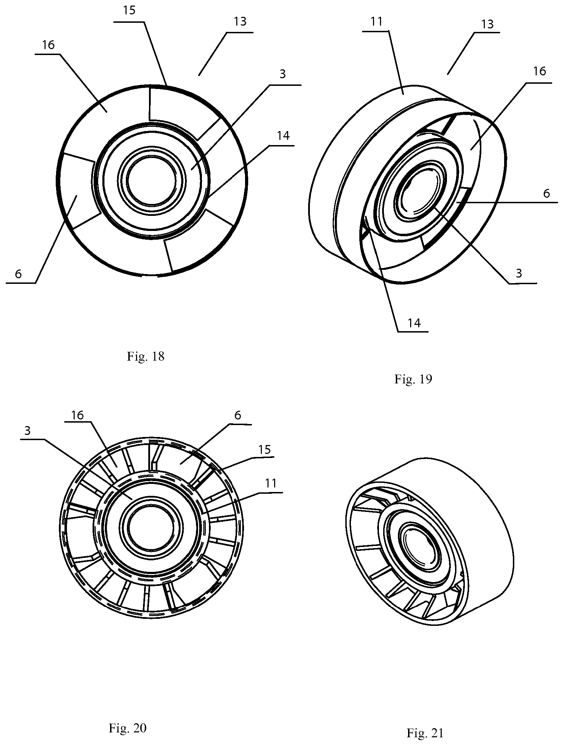

In embodiment 3b, the arrangement of tongues is the same as in embodiment 1 or 2, meaning that the pulley has tongues which are radially arranged or properly inclined away from the radius, although inside the polyamide casting there is metal reinforcement **13** (Fig. 18 - Fig. 21). The reinforcement **13** is made of deep drawn sheet metal with thickness of approx. 6 mm. The reinforcement **13** has an inner ring **14** which metallically surrounds the housing of the bearing and corresponds to the inner ring **2** of the pulley, and an outer ring **15** which corresponds to the outer ring **1** of the pulley. Connecting elements **16** are placed between rings **14** and **15** of the reinforcement **13.** The number of connecting elements **16** is proper for the number of windows **6** of the pulley. The manufacturing of a finished pulley involves applying the reinforcement **13** onto the bearing **3** and subsequently enclosing it in a casting mould to which polymer plastic is injected, e.g. polyamide plastic. Plastic surrounds the reinforcement, due to which the reinforcement is overpoured by it. After cooling down, the pulley constituting a hybrid of plastic and metal is removed from the mould. A polyamide pulley with inner reinforcement **13** is presented in Figs. 20 and 21. The inner metal ring **14** surrounding the bearing in connection to the connecting elements **16** and the outer ring **15** causes increased dissipation of heat from the bearing. Metal is a considerably better heat conductor than plastic, due to which the dissipation of heat is more efficient. The reinforcement of the pulley also causes an increase in its resistance to mechanical load.

### Embodiment 4.

The method for dissipating heat from a bearing pulley is that the heat generated as a result of the rotational movement of the bearing **3** is dissipated via a metallic structure with a high heat transfer coefficient surrounding the housing of the bearing in the form of reinforcement **7, 13,** into the space between rings **1** and **2** of the pulley and into the surface of the outer circumference of the pulley, and it is additionally exposed to the flow of air between the inner **2** and outer ring **1** of the pulley caused by the rotational movement of the pulley and the properly shaped position of its tongues **42.** Other possible versions of shaping the tongues **42** and **41** are described in embodiment 1 and 2, while the construction of the metallic structure in the form of reinforcement has been described in embodiment 3a and 3b. Steel sheet metal for deep drawing DC01 has been used as reinforcement. It is also possible to use DC02, DC03 or DC04 sheet metal.

### Other possible versions

Apart from polyamide plastic indicated in embodiment 1, each of the listed embodiments involving the device and the method can use another polymer plastic or polymer plastic with an admixture of reinforcing material. In the case of polyamide plastic, polyamide PA6 may be used, pure or with an admixture of glass fibres GF or glass balls GB of up to 50%, e.g. PA6-30GF - a polyamide with a 30% admixture of glass fibres, PA6-GB40 - a polyamide with a 40% admixture of glass balls; the same applies to Polyamide PA66. Phenol-formaldehyde resins PF or melamine-phenol-formaldehyde resins MPF can also be used as polymer plastic.

The thickness of the sheet metal of pulley reinforcement material can range from 0.1 to 5 mm. The reinforcement of the pulley can also be made of any solid material with a high heat transfer coefficient. For example, of materials such as steel, aluminium, copper, steel, nickel or alloys thereof, or alloys with other materials.

Constructions of the pulley can also be used for rollers used with multi-ribbed belts, belts with a flat surface and chains. That is because the use of a belt or a chain or another transport medium depends on the shape of the pulley track.

The invention is found useful in the automotive industry, as well as any other fields in which rotational movement is transferred from one element onto another by means of belts and/or chains.

### List of references

1. Outer ring
2. Inner ring
3. Bearing
4. Support tongue
   41. symmetrical support tongue
   42. asymmetrical support tongue
   421, 422. inclination of the asymmetrical support tongue
5. Support fill
6. Window
7. Mesh reinforcement
8. Openings in reinforcement
   81 openings in connecting elements 11
   82 openings in the outer ring 10
9. Inner ring of meshed reinforcement
10.Outer ring of meshed reinforcement
11.Connecting elements of meshed reinforcement
   α - angle of inclination from the plane of the central cross-section of the pulley
   β - angle of inclination from the radius of the pulley
12. Apertures
13. Solid reinforcement
14. Inner ring of solid reinforcement
15. Outer ring of solid reinforcement
16. Connecting elements of solid reinforcement

## Claims

1. A V-belt pulley comprising a bearing on which an inner ring is seated, support tongues connecting the inner ring (2) to an outer ring (1) constituting the track of the pulley, as well as a support fill between the support tongues, wherein the V-belt pulley further comprises at least two windows (6) uniformly distributed in the circumferential space between the aforementioned rings (1) and (2), where the windows (6) on their sides are delimited by the surface of the support tongues (42) which on one side substantially at half of their width are inclined away from the plane of the longitudinal section of the pulley by an angle α∈ <1° - 60°> **characterised in that** the support tongues (42) are arranged with respect to each other in such a manner that the uninclined part of one tongue (421) lies opposite the inclined part of the other tongue (422).

2. The pulley according to claim 1, **characterised in that** the tongues are inclined away from the radius of the pulley by an angle β ∈ <1° - 60°>, preferably β ∈ <5° - 50°>.

3. The pulley according to claim 1, **characterised in that** the angle α∈ <10° - 45°>.

4. The pulley according to claim 1 or 2 or 3, **characterised in that** it is made of plastic and comprises metal reinforcement (7)

5. The pulley according to claim 4, **characterised in that** the metal reinforcement (7) has an inner ring (9) which surrounds the housing of the bearing and corresponds to the inner ring (2) of the pulley, and an outer ring (10) which corresponds to the outer ring (1) of the pulley, while connecting elements (11) are placed between rings (9) and (10) of the reinforcement (7).

6. The pulley according to claim 5, **characterised in that** the reinforcement (7) has a discontinuous surface manifesting itself in the existence of openings (81) in the connecting elements (11), openings (82) in the outer ring (10) and in through apertures (12) in the inner ring (9).

7. The pulley according to claim 1 or 2 or 3 **characterised in that** it is made of plastic and that the plastic of the pulley constitutes polymer plastic or a composite of polymer plastic and a reinforcing material.

8. The pulley according to claim 7, **characterised in that** polymer plastic constitutes a polyamide with an admixture of fibreglass, or phenol-formaldehyde resins PF or melamine-phenol-formaldehyde resins MPF.

9. The pulley according to claim 4 or 5 or 6, **characterised in that** the material of reinforcement constitutes deep drawn sheet metal with thickness ranging from 0.1 to 5 mm.

10. The pulley according to claim 1 or 2 or 3, **characterised in that** the width of the support tongues (42) at the inner ring (2) of the pulley is smaller than the width of the support tongues (42) at the outer ring (1) of the pulley.

11. A method for dissipating heat from a bearing (3) included in the V-belt pulley according to one of the claims 1-10, wherein the heat generated as a result of the rotational movement of the bearing (3) is dissipated via a metallic structure with a high heat transfer coefficient, surrounding the housing of the bearing in the form of reinforcement (7), into the space between rings (1) and (2) of the pulley and into the surface of the outer circumference of the pulley, and it is additionally exposed to the flow of air between the inner (2) and outer ring (1) of the pulley caused by the rotational movement of the pulley.

## Patentansprüche

1. Keilriemenscheibe mit einem Lager, auf dem ein Innenring sitzt, mit Stützzungen, die den Innenring (2) mit einem die Laufbahn der Riemenscheibe bildenden Außenring verbinden, sowie mit einer Stützfüllung zwischen den Stützzungen, wobei die Keilriemenscheibe ferner mindestens zwei gleichmäßig im Umfangsraum zwischen den vorgenannten Ringen (1) und (2) verteilte Fenster (6) aufweist, wobei die Fenster (6) an ihren Seiten durch die Oberfläche der Stützzungen (42) begrenzt sind, die auf einer Seite im wesentlichen auf der Hälfte ihrer Breite um einen Winkel <1 - 60> von der Ebene des Längsschnittes der Riemenscheibe weggeneigt sind, **dadurch gekennzeichnet, dass** die Stützzungen (42) derart zueinander angeordnet sind, dass der nicht geneigte Teil der einen Zunge (421) dem geneigten Teil der anderen Zunge (422) gegenüber liegt.

2. Riemenscheibe nach Anspruch 1, **dadurch gekennzeichnet, dass** die Zungen um einen Winkel <1 - 60>, vorzugsweise <5 - 50>, vom Radius der Riemenscheibe weg geneigt sind.

3. Riemenscheibe nach Anspruch 1, **dadurch gekennzeichnet, dass** der Winkel <10 - 45>.

4. Riemenscheibe nach Anspruch 1 oder 2 oder 3, **dadurch gekennzeichnet, dass** sie aus Kunststoff gefertigt ist und eine Metallverstärkung (7) aufweist.

5. Riemenscheibe nach Anspruch 4, **dadurch gekennzeichnet, dass** die Metallverstärkung (7) einen inneren Ring (9), der das Gehäuse des Lagers umgibt und dem inneren Ring (2) der Riemenscheibe entspricht, und einen äußeren Ring (10), der dem äußeren Ring (1) der Riemenscheibe entspricht, aufweist, wobei zwischen den Ringen (9) und (10) der Armierung (7) Verbindungselemente (11) angeordnet sind.

6. Riemenscheibe nach Anspruch 5, **dadurch gekennzeichnet, dass** die Verstärkung (7) eine diskontinuierliche Oberfläche aufweist, die sich im Vorhandensein von Öffnungen (81) in den Verbindungselementen (11), Öffnungen (82) im Außenring (10) und in Durchgangsöffnungen (12) im Innenring (9) manifestiert.

7. Riemenscheibe nach Anspruch 1 oder 2 oder 3, **dadurch gekennzeichnet, dass** sie aus Kunststoff hergestellt ist und dass der Kunststoff der Riemenscheibe Polymer-Kunststoff oder einen Verbundstoff aus Polymer-Kunststoff und einem Verstärkungsmaterial darstellt.

8. Riemenscheibe nach Anspruch 7, **dadurch gekennzeichnet, dass** der polymere Kunststoff ein Polyamid mit einer Beimischung von Glasfasern oder Phenol-Formaldehyd-Harzen PF oder Melamin-Phenol-Formaldehyd-Harzen MPF darstellt.

9. Riemenscheibe nach Anspruch 4 oder 5 oder 6, **dadurch gekennzeichnet, dass** das Material der Verstärkung ein tiefgezogenes Blech mit einer Dicke im Bereich von 0,1 bis 5 mm darstellt.

10. Riemenscheibe nach Anspruch 1 oder 2 oder 3, **dadurch gekennzeichnet, dass** die Breite der Stützzungen (42) am Innenring der Riemenscheibe kleiner ist als die Breite der Stützzungen (42) am Außenring (1) der Riemenscheibe.

11. Verfahren zur Ableitung von Wärme aus einem in der Keilriemenscheibe enthaltenen Lager (3) nach einem der Ansprüche 1-10, wobei die durch die Drehbewegung des Lagers (3) entstehende Wärme über eine metallische Struktur mit hohem Wärmeübergangskoeffizienten abgeleitet wird, die das Gehäuse des Lagers in Form einer Verstärkung (7) umgibt, in den Raum zwischen den Ringen (1) und (2) der Riemenscheibe und in die Oberfläche des Außenumfangs der Riemenscheibe abgeleitet wird und zusätzlich der durch die Drehbewegung der Riemenscheibe hervorgerufenen Luftströmung zwischen dem Innen- (2) und Außenring (1) der Riemenscheibe ausgesetzt ist.

## Revendications

1. Une poulie à courroie trapézoïdale comprenant un palier sur lequel repose un anneau intérieur, des languettes de support reliant l'anneau intérieur (2) à un anneau extérieur constituant la voie de la poulie, ainsi qu'un remplissage de support entre les languettes de support, où la poulie à courroie trapézoïdale comprend en outre au moins deux fenêtres (6) uniformément réparties dans l'espace circonférentiel entre les anneaux précités (1) et (2), où les fenêtres (6) sur leurs côtés sont délimitées par la surface des languettes de support (42) qui sur un côté sensiblement à la moitié de leur largeur sont inclinées à l'écart du plan de la section longitudinale de la poulie d'un angle <1 - 60>, **caractérisée en ce que** les languettes de support (42) sont disposées les unes par rapport aux autres dans un tel de manière que la partie non inclinée d'une languette (421) se trouve à l'opposé de la partie inclinée de l'autre languette (422).

2. La poulie selon la revendication 1, **caractérisée en ce que** les languettes sont inclinées à l'écart du rayon de la poulie d'un angle <1 - 60>, de préférence <5 - 50>.

3. La poulie selon la revendication 1, **caractérisée en ce que** l'angle <10 - 45>.

4. La poulie selon la revendication 1 ou 2, ou 3, **caractérisée en ce qu'**elle est en matière plastique et comprend un renfort métallique (7).

5. La poulie selon la revendication 4, **caractérisée en ce que** le renfort métallique (7) présente un anneau intérieur (9) qui entoure le logement du palier et correspond à l'anneau intérieur (2) de la poulie, et un anneau extérieur (10) qui correspond à l'anneau extérieur (1) de la poulie, tandis que des éléments de liaison (11) sont placés entre les anneaux (9) et (10) du renfort (7).

6. La poulie selon la revendication 5, **caractérisée en ce que** le renfort (7) présente une surface discontinue se manifestant par l'existence d'ouvertures (81) dans les éléments de liaison (11), d'ouvertures (82) dans l'anneau extérieur (10) et par d'ouvertures traversantes (12) dans l'anneau intérieur (9).

7. La poulie selon la revendication 1 ou 2, ou 3, **caractérisée en ce qu'**elle est en matière plastique et **en ce que** la matière plastique de la poulie constitue une matière plastique polymère ou un composite d'une matière plastique polymère et un matériau de renforcement.

8. La poulie selon la revendication 7, **caractérisée en ce que** la matière plastique polymère constitue un polyamide avec un mélange de fibre de verre ou de résines phénol-formaldéhyde PF ou de résines mélamine-phénol-formaldéhyde MPF.

9. La poulie selon la revendication 4 ou 5, ou 6, **caractérisée en ce que** le matériau de renforcement constitue une tôle emboutie profonde d'épaisseur allant de 0,1 à 5 mm.

10. La poulie selon la revendication 1 ou 2, ou 3, **caractérisée en ce que** la largeur des languettes de support (42) au niveau de l'anneau intérieur de la poulie est inférieure à la largeur des languettes de support (42) au niveau de l'anneau extérieur (1) de la poulie.

11. Une méthode pour dissiper la chaleur d'un palier (3) inclus dans la poulie à courroie trapézoïdale selon l'une des revendications 1 à 10, la chaleur générée à la suite du mouvement de rotation du palier (3) est dissipée via une structure métallique à coefficient de transfert de chaleur élevé, entourant le logement du palier sous la forme de renfort (7), dans l'espace entre les anneaux (1) et (2) de la poulie et dans la surface de la circonférence extérieure de la poulie, et elle est en outre exposée au flux d'air entre l'anneau intérieur (2) et l'anneau extérieur (1) de la poulie provoqué par le mouvement de rotation de la poulie
